# EUROPÄISCHE PATENTANMELDUNG

(11) **EP 1 125 504 A1**
(43) Veröffentlichungstag der Anmeldung: **22.08.2001**
(21) Anmeldenummer: 01102461.9
(22) Anmeldetag: 03.02.2001
(51) Int. Cl.: A22C 13/00

(54) **Mit einer festen, Flüssigrauch enthaltenden Schicht überzogene, schlauchförmige Nahrungsmittelhülle**

(30) Priorität: 11.02.2000 US 182023 P
(71) Anmelder: Kalle Nalo GmbH & Co. KG, 65203 Wiesbaden (DE)
(72) Erfinder: Miller, Fred N., Naperville, IL 60540 (US); König, Martina, 65207 Wiesbaden (DE); Auf der Heide, Christian, 49080 Osnabrück (DE); Auf der Heide, Dirk, 49594 Alfhausen (DE)
(74) Vertreter: Plate, Jürgen, Dr.

(57) **Zusammenfassung**

Die Erfindung betrifft eine schlauchförmige Nahrungsmittelhülle, die auf einer Oberfläche eine kontinuierliche, bei Normaldruck und -temperatur feste Schicht aufweist, hergestellt aus einem Gemisch aus einem bei diesen Bedingungen festen Wachs und/oder einer wachsähnlichen Komponente, einem Flüssigrauch und einem Emulgator, mit dessen Hilfe eine stabile Wasser-in-ÖI-Emulsion gebildet werden kann. Die Schicht haftet fest an der Hülle und ist zugleich flexibel, so daß die Außenseite der Hülle ohne Probleme nach Innen gewendet werden kann. Beim Kochen oder Brühen der damit hergestellten Würste schmilzt das Wachs oder die wachsähnliche Komponente, so daß der Flüssigrauch auf die Brätoberfläche übertreten kann und dort die gewünschten Räuchereigenschaften erzeugt.

## Beschreibung

Die vorliegende Erfindung betrifft eine schlauchförmige Nahrungsmittelhülle, die auf einer Oberfläche eine kontinuierliche, bei Normaldruck und -temperatur feste Schicht aufweist, die ein Gemisch aus einer bei diesen Bedingungen festen Komponente und einem Flüssigrauch umfaßt. Die Hülle ist besonders geeignet zur Herstellung von vorgeräucherten Wurstwaren.

Mit Flüssigrauch imprägnierte, faserverstärkte, schlauchförmige Nahrungsmittelhüllen auf der Basis von Cellulose sind seit langem bekannt. Hergestellt werden diese Hüllen üblicherweise, indem Streifen aus einem naßfesten Fasermaterial - beispielsweise Streifen aus naßfestem Hanffaserpapier - zu einem Schlauch geformt und anschließend mit einer alkalischen Cellulosexanthogenat-Lösung, der sogenannten Viskoselösung, beaufschlagt werden. Die Viskoselösung wird dabei von außen, von innen oder von beiden Seiten auf den aus dem Fasermaterial gebildeten Schlauch aufgebracht. In einem saueren Fällbad erfolgt danach die Regenerierung der Cellulose aus der Viskose. Auf diese Weise werden nahtlose Hüllen erhalten. In einem nachfolgenden Schritt können die Cellulosehydrathüllen dann mit Flüssigrauch behandelt werden. Flüssigrauch wird allgemein hergestellt durch trockenes Erhitzen oder Verschwelen von Holz und Einleiten des dabei entstehenden Rauchs in Wasser. Dieser Flüssigrauch enthält einen bedeutenden Anteil an Essigsäure und ist damit stark sauer. Er kann jedoch auch durch Zusatz einer entsprechenden Menge an Neutralisierungsmitteln, wie NaOH, schwach sauer, neutral oder alkalisch eingestellt werden. Darüber hinaus ist es bekannt, den Flüssigrauch durch Hinzufügen von weiteren Komponente zu modifizieren. Diese weiteren Komponenten sind beispielsweise viskositätserhöhende Mittel, Emulgatoren oder pflanzliche oder synthetische Öle (EP-A 700 637). Der Flüssigrauch zieht praktisch vollständig in die Cellulosehülle ein.

Gegenüber den Cellulosehüllen haben die sogenannten Polymerhüllen ein wesentlich anderes Eigenschaftsprofil. Sie besitzen allgemein eine wesentlich geringere Durchlässigkeit für Sauerstoff und Wasserdampf. Das gilt insbesondere für die mehrschichtigen Polymerhüllen, die Schichten aus Polyolefin, Polyvinylidenchlorid (PVDC), Polyvinylacetal oder ähnlichen Materialien aufweisen. Polymerhüllen werden allgemein durch Extrusion oder Coextrusion mit Hilfe einer Ringdüse hergestellt. Polyamidschichten können zwar eine geringe Menge an Wasser aufnehmen, die Aufnahmefähigkeit dieser wie auch anderer Polymerschichten ist jedoch für eine Imprägnierung mit Flüssigrauch bei weitem zu gering.

Um den Flüssigrauch dennoch an solche Kunststoffhüllen zu binden, wurde vorgeschlagen, ihn mit einem hydrophilen Absorptionsmittel - wie Stärke - zu kombinieren und mit dieser Kombination eine Innenbeschichtung herzustellen. Eine innenbeschichtete Hülle dieser Art hat jedoch bisher keine Marktreife erlangt.

In der DE-A 198 18 358 ist eine schlauchförmige Hülle mit einer oder mehreren Schicht(en) aus Kunststoff beschrieben, auf deren Innenseite eine Mischung aus verflüssigtem Wachs und Raucharoma aufgesprüht wurde. Das Wachs ist ein für den menschlichen Verzehr zugelassenes Wachs, wie Bienenwachs oder Carnaubawachs. Es muß vor dem Versprühen auf mindestens 60 °C erwärmt werden, um es zu verflüssigen und mit dem Flüssigrauch verrühren zu können. Das Aufsprühen der Wachs-Flüssigrauch-Mischung erfolgt allgemein unter einem hohem Druck von etwa 170 bar. Nach dem Abkühlen entsteht daraus eine fest haftende, das Raucharoma enthaltende Schicht. Die so hergestellten Hüllen können in an sich bekannter Weise zu sogenannten Raupen gerafft und anschließend mit Wurstbrät gefüllt werden. Werden die gefüllten Wursthüllen in Heißdampf oder heißem Wasser gebrüht oder gekocht, schmilzt das Wachs und gibt den Flüssigrauch frei, der dann direkt auf das Brät übergeht und ihm die gewünschte Rauchfarbe, das Raucharoma und den Rauchgeschmack verleiht.

Es hat sich jedoch gezeigt, daß die Wachs-Flüssigrauch-Mischung sehr instabil ist und eine Entmischung bereits wenige Minuten nach dem Ende des Rührvorgangs einsetzt. Die in der DE-A angegebene Haltbarkeit der Mischung von 1 bis 2 Stunden läßt sich in keinem Fall erreichen. Beim Aufsprühen einer teilweise entmischten Zusammensetzung entsteht jedoch oft eine ungleichmäßige Schicht, die demgemäß beim späteren Erhitzen der Wurst den Flüssigrauch nicht mehr gleichmäßig übertragen kann.

Es stellte sich damit die Aufgabe, die bekannte Wachs-Flüssigrauch-Mischung so zu verbessern, daß sich damit gleichmäßig beschichtete Nahrungsmittelhüllen herstellen lassen.

Gelöst wurde die Aufgabe durch den Zusatz von Emulgatoren zur Wachs-Flüssigrauch-Mischung. Die Wasser-in-ÖI-Emulsion läßt sich ohne Probleme lagern und verarbeiten, ohne daß sie erneut aufgerührt werden muß. Auch beim Abkühlen tritt keine Entmischung der Emulsion ein.

Die Emulsion kann zur Herstellung von bei Raumtemperatur festen Überzügen auf Polymerhüllen wie auch auf Cellulosehydrathüllen eingesetzt werden. Nach dem Abkühlen bildet sich eine Schicht, die stärker haftet und gleichzeitig flexibler ist als die aus der oben genannten DE-A bekannte, so daß sie auch beim Wenden der Hülle nicht abplatzt oder abbröckelt und auch keine Risse bildet. Damit ist es möglich, zunächst die Außenseite zu beschichten - was technisch einfacher zu realisieren ist - und diese dann nach innen zu wenden.

Gegenstand der Erfindung ist demgemäß eine schlauchförmige Nahrungsmittelhülle, die auf einer Oberfläche eine kontinuierliche, bei Normaldruck und-temperatur feste Schicht aufweist, hergestellt aus einem Gemisch mit einem bei diesen Bedingungen festen Wachs und/oder einer wachsähnlichen Komponente und einem Flüssigrauch, die dadurch gekennzeichnet ist, daß das Gemisch einen Emulgator enthält, der es in einer stabilen Wasser-in-ÖI-Emulsion hält.

Welche Emulgatoren diese Wirkung erzielen, kann der Fachmann sehr schnell durch einfache Vorversuche ermitteln. Als besonders geeignet haben sich Emulgatoren auf Lecithinbasis erwiesen. Lebensmittelrechtlich unbedenkliche Emulgatoren auf Lecithinbasis sind beispielsweise unter den Bezeichnungen ®Adlec und ®Ultralec erhältlich. Prinzipiell können die Emulgatoren nicht-ionisch, anionisch oder kationisch sein, wobei die nicht-ionischen allgemein bevorzugt sind. Als besonders günstig haben sich Emulgatoren mit einem HLB-Wert (HLB = Hydrophilic Lipophilic Balance) von 2 bis 9 erwiesen. Das gilt jedoch nicht ohne Ausnahmen. So stabilisieren verschiedene Emulgatoren, wie Sorbitan-monooleat (®Span 80; HLB: 4,3), Polyoxyethylen(20)-sorbitan-monooleat (®Tween 80; HLB: 14,9) oder ethoxylierte Sojafettsäureglyceride (®Imwitor), die Emulsion nur schwach oder gar nicht. Eine Theorie, die die Wirksamkeit einzelner Emulgatoren erklären oder vorhersagen könnte, steht zur Zeit noch nicht zur Verfügung.

Der Anteil des Emulgators liegt allgemein bei 0,2 bis 5,0 Gew.-%, bevorzugt 0,6 bis 2,0 Gew.-%, besonders bevorzugt 0,8 bis 1,8 Gew.-%, jeweils bezogen auf das Gesamtgewicht der Emulsion. Die Emulsion läßt sich herstellen durch kräftiges Verrühren der Einzelkomponenten. Beim Stehenlassen und Abkühlen der Emulsion trennt sich die Wasserphase nicht von der Ölphase.

Das Wachs und/oder die wachsähnliche Komponente gehen ebenfalls teilweise oder vollständig auf das Brät über. Dieser Bestandteil der Beschichtung muß daher in gleicher Weise lebensmittelrechtlich unbedenklich sein. Besonders geeignet sind daher tierische Wachse (wie Bienenwachs), pflanzliche Wachse (wie Camaubawachs), fossile Wachse (wie Montanwachs) und Mineralwachse. Wachsähnliche Komponenten sind beispielsweise chemisch veränderte Wachse, Wachsester, Wachsalkohole oder hochmolekulare Fette.

Der Schmelzpunkt des Wachses, der wachsähnlichen Komponente oder eines Gemisches davon liegt allgemein bei mindestens 35 °C, besser noch bei mindestens 45 °C. Bei den Temperaturen, die üblicherweise beim Brühen oder Kochen der Wurst erreicht werden, muß es sich dagegen verflüssigen, damit es den Flüssigrauch freigeben kann.

Der Flüssigrauch selbst kann ein "natürlicher" Flüssigrauch sein. Ein solcher Flüssigrauch läßt sich erhalten durch Verschwelen oder trockenes Erhitzen von Holz, vorzugsweise Hartholz (wie Hickory), und Einleiten des Rauchs in reines Wasser. Aufgrund seines hohen Gehalts an Essigsäure ist ein solcher natürlicher Flüssigrauch stark sauer. Durch Zusatz von Neutralisationsmitteln (wie NaOH) kann der pH-Wert des Flüssigrauchs auch neutral oder alkalisch eingestellt werden. Bei einem pH-Wert von etwa 5 bis etwa 8 neigen die phenolischen Bestandteile des Flüssigrauchs zu Ausflocken. Durch den Zusatz von geeigneten Additiven, beispielsweise von Glycerin, läßt sich das jedoch unterdrücken. Daneben oder auch zusätzlich kann der Flüssigrauch auch übliche und bekannte Zusätze enthalten, beispielsweise anorganische oder organische Farbmittel ("colorants", insbesondere Farbstoffe oder -pigmente), oder viskositätssteigemde Mittel. Mit dem natürlichen Flüssigrauch läßt sich allgemein das beste Ergebnis erzielen. Er überträgt besonders intensiv Rauchfarbe, -geruch und -geschmack auf das Brät.

Das Gewichtsverhältnis von Wachs zu Flüssigrauch beträgt allgemein 1 : 1 bis 3 : 1, bevorzugt etwa 2 : 1. Bei einem solchen Mischungsverhältnis erhält man eine Wasser-in-ÖI-Emulsion, die eine gleichmäßige, bei Raumtemperatur feste Beschichtung ergibt.

Das Aufbringen der Emulsion kann besonders einfach durch Aufsprühen erfolgen. Es sind jedoch auch andere bekannte Verfahren einsetzbar, beispielsweise Beschichten mit einem Rakel. Das Verfahren ist allgemein entsprechend der Dicke der zu erzeugenden Schicht zu wählen. Schichten verschiedener Dicke können mehr oder weniger Flüssigrauch übertragen. Allgemein liegt die Schichtdicke bei 5 bis 100 um, bevorzugt 10 bis 50 um. Technisch einfacher ist es, die Außenseite der Hülle zu beschichten und die Hülle dann zu wenden, so daß die Außenseite zur Innenseite wird. Es ist jedoch auch möglich, die Schicht direkt auf der Innenseite zu erzeugen.

Gemäß einer bevorzugten Ausführungsform ist das Grundmaterial für die erfindungsgemäße Nahrungsmittelhülle eine ein- oder mehrschichtige Hülle auf Basis von synthetischen Polymeren. Auf der äußeren und/oder inneren Oberfläche befindet sich dabei häufig eine Schicht aus aliphatischem, teilaromatischem und/oder vollaromatischem Polyamid oder Copolyamid oder einem Polyolefin, dessen Oberfläche aufgerauht ist. Dazwischen kann sich eine Sauerstoff und/oder Wasserdampf sperrende Schicht befinden. Auch mehrere solcher Schichten sind möglich. Die Schicht kann aus Polyolefin, Polyvinylidenchlorid (PVDC), EthylenNinylalkohol-Copolymere (EVOH) oder anderen Polymeren bestehen. Um ein Delaminieren der einzelnen Schichten zu verhindern, befinden sich zwischen ihnen oftmals noch (relativ dünne) Haftschichten.

Gemäß einer weiteren Ausführungsform ist das Grundmaterial eine Cellulosehydrathülle, die auch faserverstärkt sein kann. Solche Hüllen lassen sich nach dem lange bekannten Viskoseverfahren oder nach dem N-Methyl-morpholin-N-oxid(NMMO)-Verfahren herstellen. Anders als beim Viskoseverfahren wird die Cellulose beim NMMO-Verfahren nicht chemisch derivatisiert, sondern lediglich physikalisch gelöst. Die Viskoselösung bzw. die Cellulose/NMMO/Wasser-Lösung kann dann auf ein zu einem Schlauch geformtes Fasermaterial (dieses ist in der Regel ein mit geeignetes Mitteln gebundenes und dadurch naßfest gemachtes Hanffaserpapier) aufgetragen und regeneriert werden.

Das Grundmaterial kann auch ein Hülle auf der Basis von Stärke oder Gemischen von Stärke mit anderen Polymeren sein. Schließlich sind auch Collagenhüllen geeignet.

All diese Hüllen können neben der erfindungsgemäßen Beschichtung noch weitere Beschichtungen oder Imprägnierungen aufweisen. So ist es zum Beispiel zweckmäßig, auf der Außenseite von Cellulosehüllen eine Imprägnierung aufzubringen, die Schimmelbildung verhindert.

Die nachfolgenden Beispiele dienen zur Erläuterung der Erfindung.

### Beispiel 1 (Polymerhülle):

Auf die Außenseite einer dreischichtigen Hülle (Schichtabfolge: Polyamid/ Polyolefin + Haftvermittler/Polyamid, erhältlich unter der Bezeichnung ® Nalobar) vom Kaliber 63 (= 63 mm Innendurchmesser) wurde mit einer ÖI-in-Wasser-Emulsion, hergestellt durch intensives Verrühren von

| | |
|---|---|
| 200 g | Bienenwachs, |
| 100 ml | eines saueren Flüssigrauchs (® Enviro 24 P von Red Arrow, |
| | Wisconsin) und |
| 4,2 g | eines nicht-ionischen Emulgators auf Lecithinbasis (HLB: 4; |
| | ® Adlec), |

so lange gesprüht, bis sich eine geschlossene Schicht gebildet hatte. Anschließend ließ man die Schicht bei Raumtemperatur aushärten. Die Hülle wurde sodann gewendet, mit Brühwurstbrät gefüllt und gebrüht. Die Temperatur in der Brühkammer betrug dabei 78 °C, die Kerntemperatur der Würste etwa 72 °C. Danach wurden die Würste abgekühlt. Nach dem Entfernen der Hülle zeigte sich, daß die Brätoberfläche die Rauchfarbe gleichmäßig aufgenommen hatte und das gewünschte Raucharoma in unverfälschter Form aufwies.

### Beispiel 2 (Cellulosehülle):

Auf die Außenseite einer mit Hanffasern verstärkten Cellulosehydrathülle (FDS farblos) vom Kaliber 45 wurde eine Wasser-in-ÖI-Emulsion, hergestellt durch intensives Verrühren von

| | |
|---|---|
| 200 g | Bienenwachs, |
| 100 ml | eines sauren Flüssigrauchs (®Supreme H von Red Arrow) und |
| 4,2 g | eines Emulgators auf Lecithinbasis (®Adlec), |

aufgesprüht bis sich eine geschlossene Schicht gebildet hatte. Das Aushärten der Schicht erfolgte wiederum bei Raumtemperatur. Unmittelbar vor dem Füllen wurde die Hülle gewendet, so daß die beschichtete Seite innen war, danach mit Brät gefüllt und - wie bereits beschrieben - gebrüht. Nach dem Abkühlen und Abschälen der Hülle zeigte sich ein gleichmäßig gefärbtes Brät mit dem typischen Räucheraroma.

### Vergleichsbeispiel:

Beispiel 1 wurde wiederholt mit der einzigen Abweichung, daß anstelle des Emulgators auf Lecithinbasis ein ethoxyliertes Sojafettsäureglycerid (®Imwitor 470 von Condea Chemie GmbH) verwendet wurde. Nach Beendigung des Rührvorgangs setzte jedoch praktisch sofort eine Phasentrennung ein, so daß sich eine gleichmäßige Beschichtung mit diesem Gemisch nicht herstellen ließ.

## Patentansprüche

1. Schlauchförmige Nahrungsmittelhülle, die auf einer Oberfläche eine kontinuierliche, bei Normaldruck und -temperatur feste Schicht aufweist, hergestellt aus einem Gemisch mit einem bei diesen Bedingungen festen Wachs oder einer wachsähnlichen Komponente und einem Flüssigrauch, dadurch gekennzeichnet, daß dem Gemisch ein Emulgator hinzugefügt ist, der es in einer stabilen Wasser-in-ÖI-Emulsion hält.

2. Nahrungsmittelhülle gemäß Anspruch 1, dadurch gekennzeichnet, daß der Emulgator ein nicht-ionischer, anionischer oder kationischer Emulgator ist.

3. Nahrungsmittelhülle gemäß Anspruch 1, dadurch gekennzeichnet, daß der Emulgator ein Emulgator auf Lecithinbasis ist.

4. Nahrungsmittelhülle gemäß Anspruch 1, dadurch gekennzeichnet, daß der Emulgator einen HLB-Wert von 2 bis 9 aufweist.

5. Nahrungsmittelhülle gemäß Anspruch 1, dadurch gekennzeichnet, daß der Anteil des Emulgators 0,2 bis 5,0 Gew.-%, bevorzugt 0,6 bis 2,0 Gew.-%, besonders bevorzugt 0,8 bis 1,8 Gew.-%, beträgt, jeweils bezogen auf das Gesamtgewicht der Emulsion.

6. Nahrungsmittelhülle gemäß Anspruch 1, dadurch gekennzeichnet, daß das Wachs Bienenwachs oder Carnaubawachs ist.

7. Nahrungsmittelhülle gemäß Anspruch 1, dadurch gekennzeichnet, daß die wachsähnliche Komponente ein hochmolekulares Fett ist.

8. Nahrungsmittelhülle gemäß Anspruch 7, dadurch gekennzeichnet, daß das hochmolekulare Fett ein Triglycerid mit langen Fettsäuresubstituenten oder ein hochmolekulares Paraffin ist.

9. Nahrungsmittelhülle gemäß Anspruch 1, dadurch gekennzeichnet, daß der Schmelzpunkt des Wachses, der wachsähnlichen Komponente oder eines Gemisches davon bei mindestens 35 °C, bevorzugt bei mindestens 45 °C, liegt.

10. Nahrungsmittelhülle gemäß Anspruch 1, dadurch gekennzeichnet, daß der Flüssigrauch ein saurer Flüssigrauch ist.

11. Nahrungsmittelhülle gemäß Anspruch 1, dadurch gekennzeichnet, daß das Gewichtsverhältnis von Wachs und/oder wachsähnlicher Komponente zu Flüssigrauch 1 : 1 bis 3 : 1, bevorzugt etwa 2 : 1, beträgt.

12. Nahrungsmittelhülle gemäß Anspruch 1, dadurch gekennzeichnet, daß sie aus einer ein- oder mehrschichtigen Hülle auf der Basis von synthetischen Polymeren hergestellt ist.

13. Nahrungsmittelhülle gemäß Anspruch 1, dadurch gekennzeichnet, daß sie aus einer Hülle auf der Basis von regenerierter Cellulose hergestellt ist.
